# EUROPÄISCHE PATENTANMELDUNG

(11) **EP 2 759 434 A2**
(43) Veröffentlichungstag der Anmeldung: **30.07.2014**
(21) Anmeldenummer: 13198317.3
(22) Anmeldetag: 19.12.2013
(51) Int. Cl.: B60J 7/06

(54) **Rollenwagen und modulares Baukastensystem für einen Rollenwagen für eine Schiebeverdeckstruktur eines Lastwagens**

(30) Priorität: 23.01.2013 DE 102013201004
(71) Anmelder: ZF Friedrichshafen AG, 88038 Friedrichshafen (DE)
(72) Erfinder: Tiemann, Burkhard, 49152 Bad Essen (DE); Lagemann, Bernard, 49434 Neuenkirchen (DE)

(57) **Zusammenfassung**

Die Erfindung betrifft einen Rollenwagen (4, 5, 6) für eine Schiebeverdeckstruktur (1) eines Lastwagens, mit einem Rollenwagenkörper (14), an welchem an zumindest einer Seite zumindest eine Laufrolle (25, 25') zum Bewegen des Rollenwagens (4, 5, 6) entlang einer an der Schiebeverdeckstruktur (1) vorhandenen Schiene (37) aufweist, wobei der Rollenwagenkörper (4, 5, 6) zumindest zweiteilig aus einem oberen Rollenwagenelement (16, 16') und einem unteren Rollenwagenelement (17, 17') aufgebaut ist, welche lösbar miteinander verbunden sind.

Die Erfindung betrifft darüber hinaus ein modulares Baukastensystem für einen Rollenwagen (4, 5, 6) für eine Schiebeverdeckstruktur (1) eines Lastwagens, insbesondere für einen Rollenwagen (4, 5, 6), wobei das Baukastensystem ein unteres Rollenwagenelement (17) mit zumindest einer Laufrolle (25, 25') zum Bewegen des Rollenwagens (4, 5, 6) in einer Schiene (37) und zumindest ein oberes Rollenwagenelement (16) aufweist, wobei das obere Rollenwagenelement (16) lösbar mit dem unteren Rollenwagenelement (17) verbunden ist. Die Erfindung betrifft weiterhin eine Schiebeverdeckstruktur (1) für Lastwagen mit einer Abdeckplane.

## Beschreibung

Die Erfindung betrifft einen Rollenwagen für eine Schiebeverdeckstruktur gemäß dem Oberbegriff des Anspruchs 1, ein modulares Baukastensystem für einen Rollenwagen einer Schiebeverdeckstruktur gemäß dem Oberbegriff des Anspruchs 13 sowie eine Schiebeverdeckstruktur für Lastwagen mit einer Abdeckplane gemäß Oberbegriff des Anspruchs 14.

Lastwagen, das heißt Lastkraftwagen und Anhänger (Trailer) sowie Auflieger der Lastkraftwagen, sind im Stand der Technik in verschiedenen Ausgestaltungen bekannt. So sind beispielsweise die sogenannten Pritschenwagen bekannt, die eine ebene offene Ladefläche hinter der Fahrerkabine aufweisen. Um dennoch einen sicheren und trockenen Transport von Ladung zu gewährleisten, ist die Ladefläche derartiger Pritschenwagen üblicherweise mit einem Verdeck versehen. Im Stand der Technik sind hierzu feste Verdecke und Schiebeverdecke bekannt. Schiebeverdecke können geöffnet werden, weisen gegenüber festen Verdecken daher den Vorteil auf, dass der Ladevorgang des Lastwagens, beispielsweise bei Kranbeladung, durch den Schiebemechanismus erheblich erleichtert wird, da der Laderaum von oben oder seitlich zugänglich gemacht werden kann. Die Schiebeverdecke umfassen obere Planen und seitliche Planen. Um ein leichtes Öffnen und Schließen des Schiebeverdecks zu ermöglichen, ist es erforderlich, dass die auf der Schiebeverdeckstruktur aufliegende Plane beim Öffnen gleichmäßig gefaltet wird. Die oberen Planen liegen hierzu auf einer Schiebeverdeckstruktur mit Längs- und Querträgern auf, wobei die Längsträger als Schienen ausgebildet sind und als Längsgurte bezeichnet werden, und die Querträger sogenannte Spriegel sind, welche quer zwischen zwei parallel angeordneten Längsgurten verlaufen. Zur Zwangsfaltung der auf den Spriegeln der Schiebeverdeckstruktur aufliegenden Plane sind die Spriegel über sogenannte Faltplatten miteinander verbunden. Zum leichten Öffnen und Schließen einer derartigen Schiebeverdeckstruktur sind die Spriegel und/oder die Faltplatten auf Rollenwagen bzw. Schlitten, die in den Längsgurten laufen, angeordnet.

Ein grundsätzliches Problem besteht jedoch darin, dass die Schiebeverdeckstruktur hohen Belastungen ausgesetzt ist und es vorkommen kann, dass ein defekter Rollenwagen oder eine defekte Faltplatte ausgetauscht werden müssen. Dies kann unter Umständen sehr zeitaufwändig sein, da zum Austausch von Rollenwagen oder daran angelenkter Faltplatten sämtliche davor liegenden Rollenwagen aus der Schiene entfernt werden müssen, da die Rollenwagen nicht einzeln aus der Schiene des Längsträgers entfernbar sind.

In DE 696 06 758 T2 ist eine Lastkraftwagen-Planenabdeckungs-Vorrichtung beschrieben, welche ein Austauschen der Faltplatten im Falle einer Beschädigung ohne ein Abnehmen der gesamten Planenstruktur erlaubt. Eine derartige Reparatur muss hier jedoch von der Unterseite der Wagenplane aus durchgeführt werden, was im Hinblick auf die Zugänglichkeit nicht vorteilhaft ist, insbesondere wenn ein Lastkraftwagen im Innenraum bereits voll beladen ist.

Daher ist es eine Aufgabe der vorliegenden Erfindung, einen Rollenwagen, ein modulares Baukastensystem für einen Rollenwagen und eine Schiebeverdeckstruktur bereitzustellen, bei welchen ein Austausch von Rollenwagen und/oder Faltplatten auf einfache und schnelle Weise ermöglicht wird.

Diese Aufgabe wird durch einen Rollenwagen für eine Schiebeverdeckstruktur mit den Merkmalen gemäß Anspruch 1, ein modulares Baukastensystem für einen Rollenwagen mit den Merkmalen gemäß Anspruch 13 sowie eine Schiebeverdeckstruktur für Lastwagen mit einer Abdeckplane mit den Merkmalen gemäß Anspruch 14 gelöst. Bevorzugte Ausführungsformen der Erfindung sind in den abhängigen Ansprüchen definiert.

Es wird ein Rollenwagen bereitgestellt für eine Schiebeverdeckstruktur eines Lastwagens mit einem Rollenwagenkörper, welcher an zumindest einer Seite zumindest eine Laufrolle zum Bewegen des Rollenwagens entlang einer an der Schiebeverdeckstruktur vorhandenen Schiene aufweist, wobei der Rollenwagenkörper zumindest zweiteilig aus einem oberen Rollenwagenelement und einem unteren Rollenwagenelement aufgebaut ist, welche lösbar miteinander verbunden sind. Durch die zweiteilige Ausbildung des Rollenwagenkörpers wird die Reparatur oder ein Auswechseln des Rollenwagens auf einfache Weise ermöglicht. Das obere Rollenwagenelement kann einfach von oben von dem unteren Rollenwagenelement gelöst werden, wobei das obere und das untere Rollenwagenelement derartig zusammenwirkend ausgebildet sind, dass sie im Wesentlichen senkrecht nach oben aus der Schiene herausgenommen werden kann anstatt aus der Schiene in Längsrichtung herausgeschoben werden zu müssen. Die zuvor beschriebene Anwendung des Rollenwagens für eine Schiebeverdeckstruktur eines Lastwagens umfasst sowohl die Anwendung für eine angetriebene Zugmaschine als auch für einen gezogenen Anhänger oder Auflieger. Der Rollenwagen kann darüber hinaus auch für andere Anwendungen eingesetzt werden, beispielsweise für eine Schiebeverdeckstruktur eines Sightseeing-Busses oder eines anderen Sonderfahrzeugs. Die Schiebeverdeckstruktur kann allgemein Straßenfahrzeugen oder schienengebundenen Fahrzeugen zugeordnet sein, wobei ein Öffnen bzw. Schließen der Schiebeverdeckstruktur je nach Anordnung derselben in Fahrzeuglängs- oder in Fahrzeugquerrichtung erfolgen kann. Weiterhin kann die zuvor beschriebene Schiebeverdeckstruktur auch einer stationären Einrichtung wie beispielsweise einem Container zugeordnet sein.

Gemäß einer bevorzugten Ausführungsform wirken das obere Rollenwagenelement und das untere Rollenwagenelement im Verbindungszustand gemeinsam als Lager für eine gelenkige Verbindung mit einer Faltplatte der Schiebeverdeckstruktur. Hierdurch kann ebenfalls auf einfache Art und Weise wie oben beschrieben die Faltplatte im Falle eines Versagens ausgewechselt werden, indem lediglich das obere Rollenwagenelement abgenommen wird, wobei das untere Rollenwagenelement in der Schiene verbleiben kann. Dann kann die defekte Faltplatte entnommen werden und durch eine neue Faltplatte ersetzt werden. Diese wird dann an der Schiebeverdeckstruktur durch Schließen und Verbinden der beiden Rollenwagenelemente wieder gesichert.

Gemäß einer weiteren bevorzugten Ausführungsform ist nach Lösen und Abnehmen des oberen Rollenwagenelements von dem unteren Rollenwagenelement die Faltplatte aus dem Rollenwagen entnehmbar. Es muss nicht die gesamte Schiebeverdeckstruktur zerlegt werden, so dass hierdurch eine große Zeitersparnis erzielt werden kann.

Vorzugsweise wird das Lager durch eine erste halbkreisförmige Ausnehmung in dem unteren Rollenwagenelement und eine zweite halbkreisförmige Ausnehmung in dem oberen Rollenwagenelement gebildet, welche gemeinsam eine kreisförmige Ausnehmung bilden, in welcher im Verbindungszustand des Rollenwagens die Faltplatte schwenkbar gelagert ist. Das so gebildete Lager kann auf einfache Weise durch Abnehmen des oberen Rollenwagenelements die Faltplatte freigeben, so dass diese im Falle einer Reparatur einfach auswechselbar ist.

Es ist darüber hinaus vorteilhaft, wenn die lösbare Verbindung des unteren Rollenwagenelements und des oberen Rollenwagenelements mittels eines Schnellverschlusses, insbesondere mittels eines in eine in den oberen und unteren Rollenwagenelementen jeweilig vorgesehen Bohrung einführbaren Bolzens oder Schraube, gebildet ist. Dies ermöglicht eine besonders einfache und schnelle Befestigung der beiden Rollenwagenelemente miteinander sowie ein schnelles und einfaches Lösen.

Ein weiterer Vorteil ergibt sich daraus, dass an dem unteren Rollenwagenelement und an dem oberen Rollenwagenelement miteinander korrespondierende Fügeschrägen, insbesondere in zwei senkrecht zueinander stehenden Raumrichtungen, als Positionierhilfe beim Zusammenbau des unteren und oberen Rollenwagenelements vorgesehen sind. Durch die senkrecht zueinander stehenden Fügeschrägen der beiden Rollenwagenelemente wird neben einer korrekten Positionierung beim Zusammenbau auch ein sicherer Sitz der beiden Rollenwagenelemente gewährleistet. Zudem werden eventuell auftretende Querkräfte jeweils auf die Fügeschrägen abgeleitet und nicht beispielsweise auf eine Schraube oder einen Bolzen, welcher die beiden Rollenwagenelemente aneinander fixiert.

Vorzugsweise weist das obere Rollenwagenelement eine Anbindungseinrichtung zum Verbinden des Rollenwagens mit einem Spriegel der Schiebeverdeckstruktur auf, auf welchem eine Plane aufliegt. Vorteilhaft ist es darüber hinaus, wenn die Plane dann noch mittig an der Faltplatte bzw. an einem mittig an der Faltplatte angebrachten weiteren Spriegel als auch an einer an dem Rollenwagen vorgesehenen Befestigungseinrichtung angebracht wird. Dies stellt eine sichere Fixierung der Plane sicher.

Gemäß einer weiteren bevorzugten Ausführungsform sind das obere Rollenwagenelement und das untere Rollenwagenelement aus Kunststoff, insbesondere aus Polyamid hergestellt, was die Schiebeverdeckstruktur besonders leicht macht. Darüber hinaus ist es vorteilhaft, wenn der Kunststoff eine Faserverstärkung aufweist. Der Werkstoff PA6-GF60, ein Polyamid-Werkstoff mit einem Glasfaseranteil von 60 Prozent, hat sich in Versuchen als vorteilhaft herausgestellt.

Gemäß noch einer weiteren bevorzugten Ausführungsform ist das untere Rollenwagenelement mit ersten Eingriffsmitteln zum in Eingriff nehmen der Schiene der Schiebeverdeckstruktur versehen. Dies verhindert ein Herausrutschen des Rollenwagens aus der Schiene.

Vorzugsweise ist das obere Rollenwagenelement mit zweiten Eingriffsmitteln zum in Eingriff nehmen der Schiene der Schiebeverdeckstruktur versehen. Dies verbessert die Sicherung des Rollenwagens in der Schiene.

Darüber hinaus können gemäß einer weiteren bevorzugten Ausführungsform die ersten Eingriffsmittel und die zweiten Eingriffsmittel in einer Raumrichtung senkrecht zu einer Längserstreckung der Schiene der Schiebeverdeckstruktur angeordnet sein.

Dabei ist es auch vorteilhaft, wenn dann die ersten Eingriffsmittel in gegenüberliegend den zweiten Eingriffsmitteln angeordnet sind. Ein Herausfallen des zusammengesetzten Rollenwagens kann so sicher beidseitig verhindert werden.

Ferner kann das obere Rollenwagenelement mit einem dritten Eingriffsmittel versehen sein, welches mit einem an dem unteren Rollenwagenelement vorgesehenen vierten Eingriffsmittel im Verbindungszustand in Eingriff gelangt. Vorzugsweise untergreift das dritte Eingriffsmittel das vierte Eingriffsmittel.

Weiterhin wird ein modulares Baukastensystem für einen Rollenwagen für eine Schiebeverdeckstruktur eines Lastwagens, insbesondere für einen Rollenwagen gemäß den zuvor beschriebenen Ausführungsformen, bereitgestellt, wobei das Baukastensystem ein unteres Rollenwagenelement mit zumindest einer Laufrolle zum Bewegen des Rollenwagens in einer Schiene und zumindest ein oberes Rollenwagenelement aufweist, wobei das obere Rollenwagenelement lösbar mit dem unteren Rollenwagenelement verbunden ist. Durch die lösbare Verbindung des oberen Rollenwagenelements und des unteren Rollenwagenelements kann der Rollenwagen variabel ausgestaltet werden. Das heißt, lediglich das untere Rollenwagenelement ist immer gleich ausgebildet, jedoch das obere Rollenwagenelement kann mit unterschiedlichen Funktionen ausgestattet sein. Hierdurch wird die Herstellung einer Schiebeverdeckstruktur besonders variabel und preisgünstig gemacht.

Gemäß einer bevorzugten Ausführungsform ist das zumindest eine obere Rollenwagenelement als Element für einen Standardrollenwagen, einen Endlaufwagen, als Element mit einer Seilanbindung oder als Element mit Elementaufnahmen zum Verbinden mit Trägerelementen ausgebildet. Hierdurch wird ermöglicht, dass auf ein und dasselbe untere Rollenwagenelement eine Vielzahl von unterschiedlich gestalteten oberen Rollenwagenelementen je nach Bedarf aufgebracht werden kann.

Vorzugsweise ist das obere Rollenwagenelement von dem unteren Rollenwagenelement mit dem unteren Rollenwagenelement in der Schiene angeordnet entfernbar. Dies ermöglicht einen besonders einfachen und schnellen Austausch des oberen Rollenwagenelements oder der zwischen dem oberen und unteren Rollenwagenelement angeordneten Faltplatte.

Weiterhin wird eine Schiebeverdeckstruktur für Lastwagen mit einer Abdeckplane, die durch mehrere Spriegel abgestützt wird, wobei die Spriegel endseitig durch jeweils eine Faltplatte lösbar aufgenommen werden und wobei die Faltplatten endseitig schwenkbar mit Rollenwagen verbunden sind, die entlang in Fahrtrichtung verlaufender Schienen zwangsgeführt verschiebbar sind, bereitgestellt, wobei ein Austausch einzelner Faltplatten im Zusammenbauzustand der

Schiebeverdeckstruktur möglich ist.

Hierbei ergeben sich die bereits bei Beschreibung des Rollenwagens aufgeführten Vorteile, insbesondere kann eine Reparatur einzelner Faltplatten erfolgen, ohne dass die Schiebeverdeckstruktur von dem Lastwagen entnommen werden muss.

Vorzugsweise wird durch eine geteilte Ausführung der Rollenwagen ein Austausch einzelner Faltplatten und / oder Rollenwagen im Zusammenbauzustand der Schiebeverdeckstruktur ermöglicht, insbesondere wird bevorzugt durch eine geteilte Ausführung der Rollenwagen, insbesondere mit einer Teilungsebene, die durch den Verbindungsbereich zwischen Rollenwagen und Faltplatte verläuft, ein Austausch einzelner Faltplatten im Zusammenbauzustand der Schiebeverdeckstruktur ermöglicht.

Durch diese Ausführungsform des Rollenwagens wird in einfacher und robuster Weise gewährleistet, dass ein Austausch einzelner Faltplatten im Zusammenbauzustand der Schiebeverdeckstruktur möglich ist.

Im Nachfolgenden werden Ausführungsformen der Erfindung unter Bezugnahme auf die beigefügte Zeichnung näher beschrieben. Es zeigen:
Fig. 1 eine Schiebeverdeckstruktur, bei welcher die Rollenwagen zum Einsatz kommen können;
Fig. 2 eine Ansicht eines Rollenwagens gemäß einer Ausführungsform in zerlegtem Zustand;
Fig. 3A, 3B jeweilige Ansichten des Rollenwagens von Fig. 2 in zusammengesetztem Zustand;
Fig. 4 eine auseinandergezogene Ansicht eines Rollenwagens gemäß einer Ausführungsform in Einzelteilen;
Fig. 5A, 5B, 5C jeweilige Ansichten eines Rollenwagens mit Seilanbindung gemäß einer Ausführungsform;
Fig. 6 zwei über einen Verriegelungsmechanismus verbundene Endrollenwagen gemäß einer Ausführungsform;
Fig. 7 auf einem Längsgurt angeordnete Rollenwagen mit Faltplatte gemäß einer Ausführungsform;
Fig. 8A, 8B eine Spriegelanbindungseinrichtung auf einem Rollenwagen gemäß einer Ausführungsform; und
Fig. 9A bis 9G den Ablauf des Anordnens eines zweiteiligen Rollenwagens gemäß einer Ausführungsform in einer Schiene eines Längsgurts.

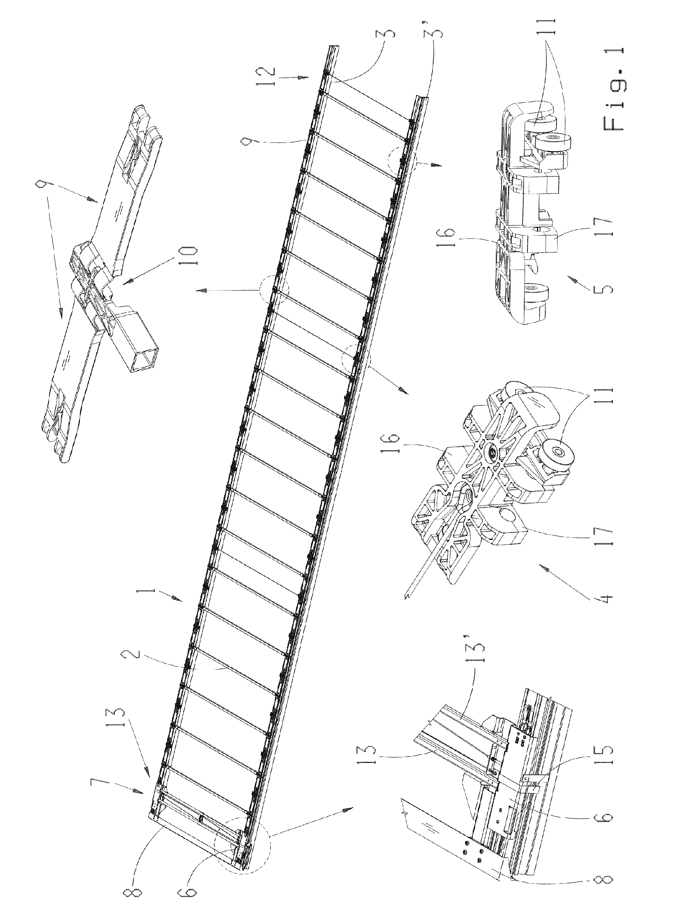

Figur 1 zeigt allgemein eine Schiebeverdeckstruktur 1 für Lastwagen bzw. Trailer, welche hier in ausgefahrenem bzw. geschlossenem Zustand dargestellt ist. Unter Lastwagen werden hier Lastkraftwagen, Lastkraftwagenanhänger und Lastkraftwagenauflieger verstanden. Die Schiebeverdeckstruktur 1 umfasst eine Vielzahl von Spriegeln 2, welche quer zwischen zwei parallel zueinander verlaufenden Längsgurten 3, 3' angeordnet sind. Auf den Spriegeln 2 liegt eine Folie bzw. Plane auf. Die als Schienen ausgebildeten Längsgurte 3, 3' sind einstückig aus Aluminium hergestellt und sind jeweilig mit Laufflächen versehen, an welchen eine Vielzahl von Rollenwagen mit jeweiligen Rollen 11 verschiebbar angeordnet sind, von denen hier lediglich ein mehrteilig ausgebildeter Rollenwagen 4 mit Seilanbindung, ein mehrteilig ausgebildeter Standard-Rollenwagen 5 und ein Endrollenwagen 6 exemplarisch dargestellt sind. Der Endrollenwagen 6 befindet sich an dem ersten Ende 7 der Schiebeverdeckstruktur 1, was dem hinteren Ende eines Lastwagens entspricht, an welchem beispielsweise eine Hebebühne angeordnet ist.

An dem gegenüberliegenden vorderen zweiten Ende 12 der Schiebeverdeckstruktur 1 befindet sich das geschlossene Ende, an welchem beispielsweise die Führerkabine des Lastkraftwagens angeordnet ist. Zwischen den jeweils in den Längsgurten 3 und 3' angeordneten Endrollenwagen 6 verläuft quer zu den Längsgurten 3, 3' ein Portalbalken 8, welcher den Abschluss der Schiebeverdeckstruktur 1 bildet. Der Portalbalken 8 dient dazu, einerseits die Plane als in Querrichtung versteifendes Element an dem Trailer zu befestigen. Weiterhin greifen typischerweise die Verschlüsse der Türen in den Portalbalken 8 ein, so dass bei verschlossenen Türen über die Türverschlüsse des Portalbalkens 8 ebenfalls befestigt und gesichert ist. Der Portalbalken 8 ist über eine hier nicht dargestellte Verbindungsstruktur, welche Hebelarme umfasst, mit den beidseitig angeordneten Endrollenwagen 6 verbunden, so dass durch Verschwenken der Hebelarme der Portalbalken 8 nach oben geklappt werden kann, um die Schiebeverdeckstruktur 1 zurückzuschieben. Weiterhin ist der Portalbalken 8 mit einer Winkelform ausgeführt, so dass er im heruntergeklappten Zustand auch die in Längsrichtung der endseitigen Stirnseiten der Längsgurte 3, 3' zumindest teilweise übergreift. Um ein Verschieben des Endrollenwagens 6 in der Endposition bei geschlossener Plane zu verhindern, ist ein Verriegelungsmechanismus 13, 13' vorgesehen. Durch Zug an einem Entriegelungsseil kann der Verriegelungsmechanismus 13, 13' freigegeben werden, so dass dann der Endrollenwagen 6 entlang der Längsgurte 3, 3' verschiebbar ist. Eine Schlaufe 15 ist für die seitliche Betätigung des Verriegelungsmechanismus 13 dargestellt. Nach dem Entriegeln der Endrollenwagen 6 wird mit einer hier nicht dargestellten Stange, welche einen endseitigen Haken aufweist, an der Schlaufe 15 in Längsrichtung der Längsgurte 3, 3' gezogen und die Schiebeverdeckstruktur 1 hierdurch geöffnet. Damit bei diesem Öffnungsvorgang, bei welchem lediglich an einer Seite des Trailers an solch einer Schlaufe 15 gezogen wird, keine Verkantung, d. h. kein Verkippen oder Verdrehen in einer waagerecht stehenden Ebene, der Endrollenwagen 6 auftritt, weisen diese mehrere hier nicht sichtbare Rollen auf. Die Endrollenwagen 6 sind mit den Standard-Rollenwagen 5 über zwischen den jeweiligen Rollenwagen angeordneten Faltplatten 9 verbunden. In der hier dargestellten Ausführungsform sind jeweils 18 Faltplatten 9 pro Längsgurt 3 bzw. 3' vorgesehen. Mittig an den Faltplatten 9 ist eine Spriegelaufnahme 10 vorgesehen, an denen die Spriegel 2 befestigt sind, so dass die Spriegel 2 beim Öffnen der Schiebeverdeckstruktur 1 nach oben geschoben werden. Zwischen den Standard-Rollenwagen 5 sind jeweils zwei Rollenwagen 4 mit Seilanbindung zum gegenüberliegenden Rollenwagen 4 vorgesehen, was der Stabilisierung dient. Insbesondere wird hierdurch eine zusätzliche Querversteifung erzielt, da durch das Seil, mit welchem die zwei gegenüberliegenden Rollenwagen 4 verbunden sind, Zugkräfte nach außen abgefangen werden. Wie in Figur 1 ersichtlich ist, sind hier zwei solcher quer zu den Längsgurten 3, 3' verlaufenden Seilanbindungen vorgesehen, welche die Längsgurte 3, 3' in Längsrichtung in etwa Dritteln. Die Längsgurte 3, 3' sind aus Metall, wie beispielsweise Aluminium, ausgebildet, wohingegen die Rollenwagen 4, 5, 6 und Faltplatten 9 zumindest überwiegend aus Kunststoff hergestellt sind.

Damit die hier nicht dargestellte Faltplane in geschlossenem Zustand nicht durch den Fahrtwind ins Flattern kommt, was zu einem erheblich höheren Kraftstoffverbrauch führen würde, weist sie mehrere hier nicht dargestellte Rungen auf, welche lösbar mit der Ladefläche verbunden werden können, beispielsweise indem sie in entsprechende Ausnehmungen eingesteckt werden. Die Rungen sind an ihren Oberseiten mit den Längsgurten 3, 3' verbunden, die wiederum die Rollenwagen 4, 5 aufnehmen.

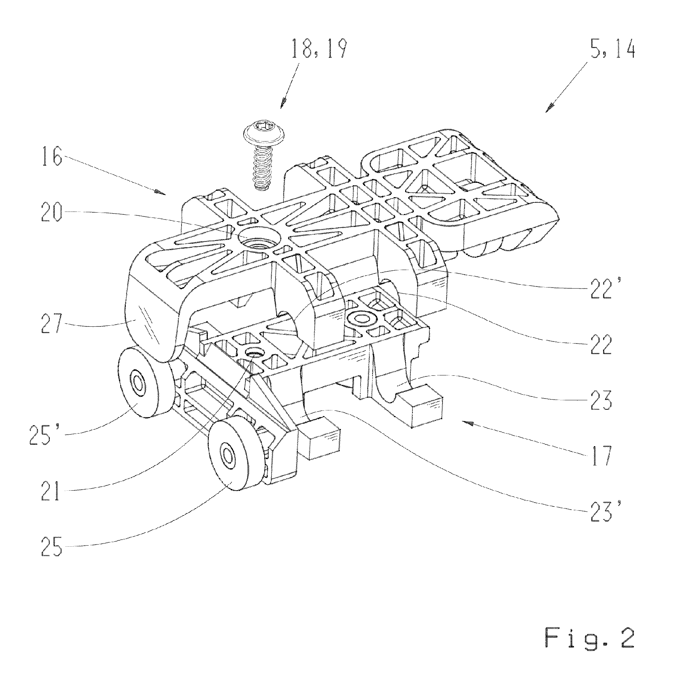

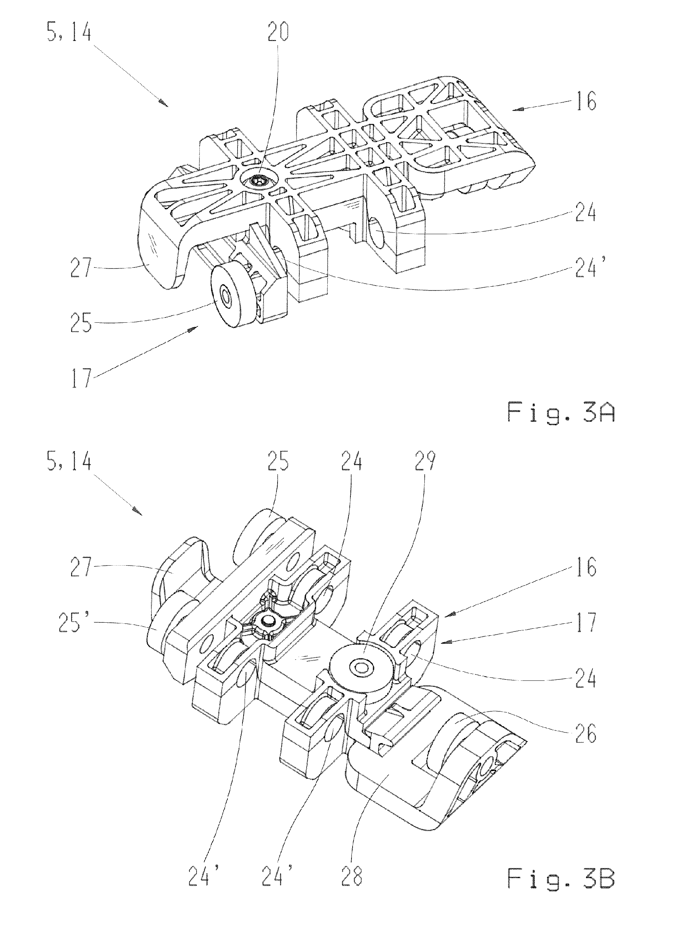

Figur 2 zeigt eine Ansicht eines Rollenwagens 5 gemäß einer Ausführungsform in zerlegtem Zustand. Der Rollenwagen 5 ist hier als Standard-Rollenwagen ohne Seilanbindung ausgeführt und weist eine einen zweiteiligen Rollenwagenkörper 14 auf, welcher aus einem oberen Rollenwagenelement 16 und einem unteren Rollenwagenelement 17 besteht. Das obere Rollenwagenelement 16 ist mit dem unteren Rollenwagenelement 17 mittels eines als Schraube 18 ausgeführten Schnellverschlusses 19 verbindbar, welche in entsprechende Bohrungen 20, 21 in dem oberen und unteren Rollenwagenelement 16, 17 einführbar ist. Durch die Schraube 18 wird die lösbare Verbindung des oberen und unteren Rollenwagenelements 16, 17 erzielt. Wie hier weiterhin erkennbar ist, weist das obere Rollenwagenelement 16 zwei voneinander beabstandete halbkreisförmige Ausnehmungen 22, 22' und zwei weitere, hier nicht sichtbare Ausnehmungen auf der gegenüberliegenden Seite auf und das untere Rollenwagenelement 17 weist an korrespondierenden Positionen zwei voneinander beabstandete halbkreisförmige Ausnehmungen 23, 23' auf der einen und zwei weitere auf der gegenüberliegenden Seite entsprechend auf, welche in zusammengesetztem Zustand des Rollenwagens 5 (siehe Figur 3A) bzw. im Verbindungszustand des oberen und unteren Rollenwagenelements 16, 17 gemeinsame kreisförmige Ausnehmungen 24, 24' bilden, welche jeweils als Lager zur schwenkbaren Lagerung einer Faltplatte 9 (siehe Figur 1) dienen. Weiterhin sind an dem unteren Rollenwagenelement 17 an dessen linker Seite zwei Laufrollen 25, 25' vorgesehen, damit sich der Rollenwagen 5 in einer Schiene eines Längsgurts 3 (siehe Figur 1) bewegen kann. Wie weiter unten in Zusammenhang mit den Figuren 3A und 3B beschrieben werden wird, weist das untere Rollenwagenelement darüber hinaus eine Führungsrolle 29 auf und das obere Rollenwagenelement 16 weist eine weitere Laufrolle 26 auf. Weiterhin ist das obere Rollenwagenelement 16 mit einer als Lasche ausgebildeten Befestigungseinrichtung 27 an seinem äußeren linken Rand versehen, an welcher eine Plane gesichert werden kann. Der hier dargestellte Rollenwagen 5 ist ausgebildet, um auf dem in Figur 1 dargestellten unteren bzw. linken Längsgurt 3' zu laufen. Ein auf dem oberen bzw. rechten Längsgurt 3 laufender Rollenwagen 5 wird einfach spiegelsymmetrisch zu dem hier dargestellten Rollenwagen 5 angeordnet, so dass sich beispielsweise die Laufräder 25, 25' und die Befestigungseinrichtung 27 nicht an dem linken Rand des Rollenwagens 5 sondern an dem rechten Rand des Rollenwagens 5 befinden.

Figur 3A und Figur 3B sind jeweilige Ansichten des in Figur 2 dargestellten Rollenwagens 5, hier jedoch in zusammengesetztem Zustand bzw. im Verbindungszustand des oberen Rollenwagenelements 16 und des unteren Rollenwagenelements 17, wobei Figur 3A eine isometrische Ansicht des Rollenwagens 5 von oben und Figur 3B eine isometrische Ansicht des Rollenwagens 5 von unten zeigt. Wie bereits erwähnt, bilden das obere Rollenwagenelement 16 und das untere Rollenwagenelement 17 gemeinsam vier kreisförmige Ausnehmungen 24, 24' aus, welche als Lager für die beidseitige schwenkbare Anbringung von Faltplatten 9 der Schiebeverdeckstruktur 2 (siehe Figur 1) dienen. Auch besonders gut in Figur 3 erkennbar ist, dass das obere Rollenwagenelement 16 das untere Rollenwagenelement 17 mit einem Abschnitt 28 überragt, an welchem Abschnitt 28 die Laufrolle 26 des oberen Rollenwagenelements 16 angeordnet ist.

Die Führungsrolle 29 ist dagegen an dem unteren Rollenwagenelement 17 als axiale Führungsrolle 29 angeordnet.

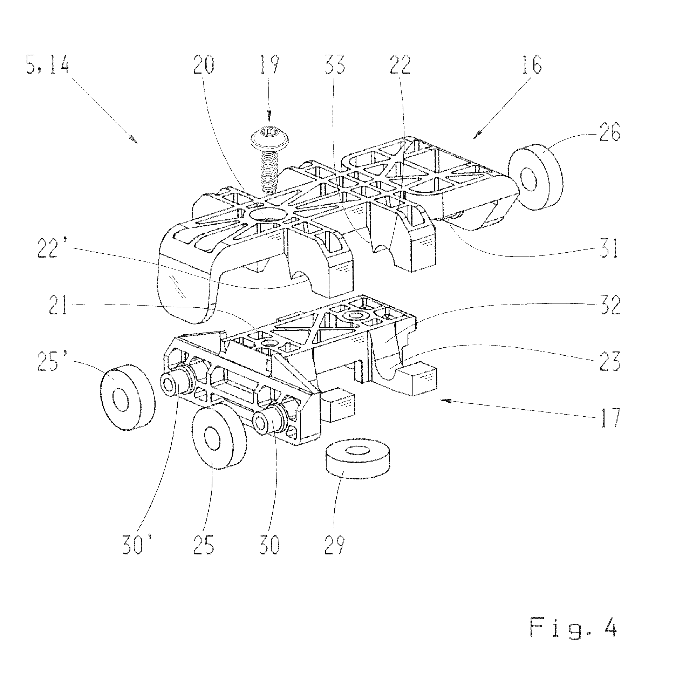

Figur 4 zeigt eine auseinandergezogene Ansicht eines Rollenwagens 5 gemäß einer Ausführungsform in Einzelteilen. Hier sind weiterhin die Lagerbolzen 30, 30' für die Laufräder 25, 25' des unteren Rollenwagenelements 17 erkennbar sowie ein Lagerbolzen 31 für das Laufrad 26 des oberen Rollenwagenelements 16. Außerdem ist in dieser Figur erkennbar, dass an dem unteren Rollenwagenelement 17 eine erste Fügeschräge 32 ausgebildet ist, welche an eine korrespondierende zweite Fügeschräge 33, welche an dem oberen Rollenwagenelement 16 ausgebildet ist, anlegbar ist und als Positionierhilfe beim Zusammenbau des oberen und unteren Rollenwagenelements 16, 17 dient.

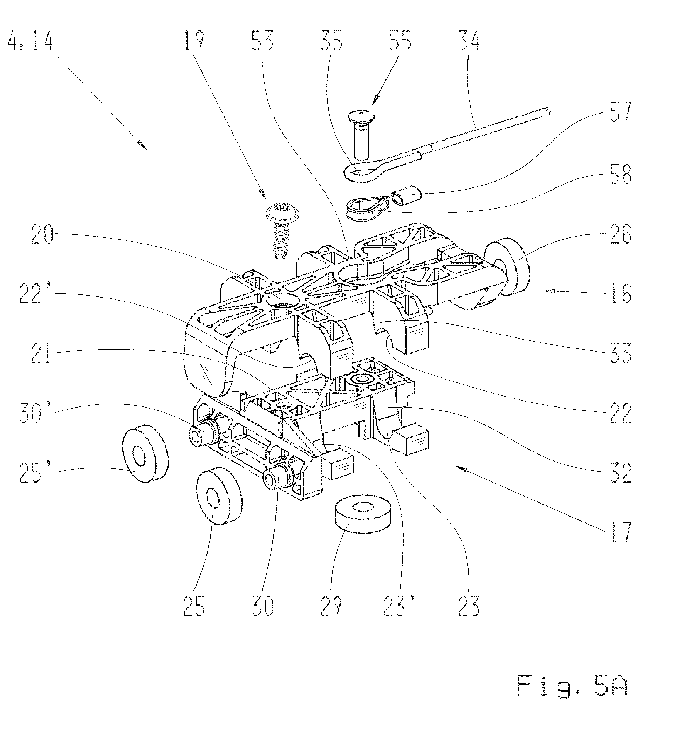

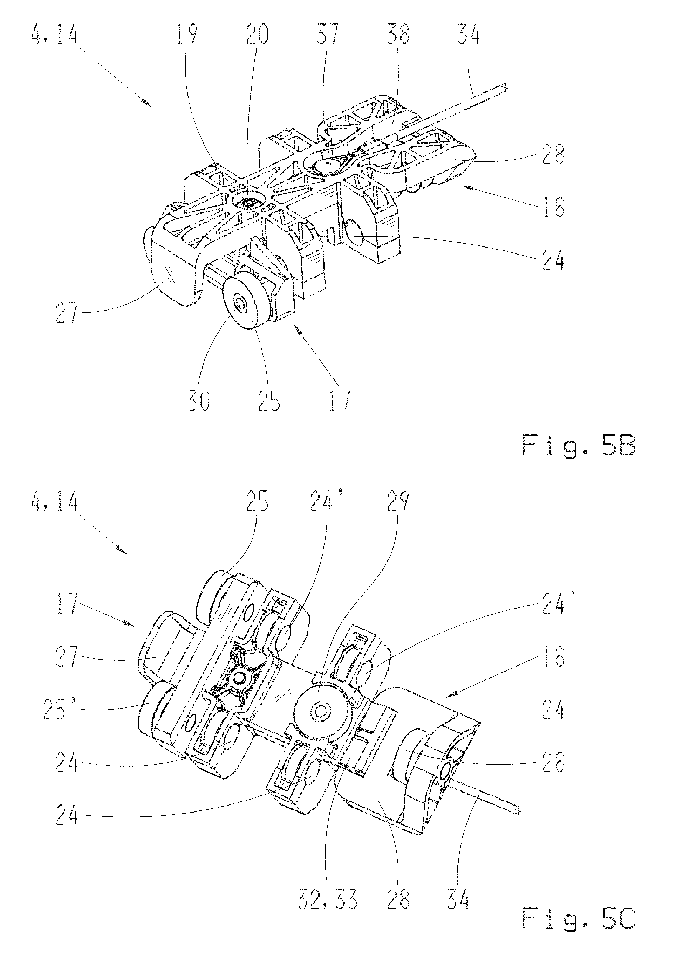

Figur 5A bis 5C zeigen jeweilige Ansichten eines Rollenwagens 4 mit Seilanbindung, welcher in dem modularen Baukastensystem verwendbar ist, wobei Figur 5A eine auseinandergezogene Ansicht des Rollenwagens 4 in Einzelteilen zeigt, Figur 5B den Rollenwagen 4 mit Seilanbindung in zusammengesetztem Zustand und Figur 5C den Rollenwagen 4 mit Seilanbindung von unten zeigt. Hierbei ist das untere Rollenwagenelement 17 identisch zu dem bereits in Zusammenhang mit den Figuren 2 bis 4 beschriebenen unteren Rollenwagenelement 17 ausgebildet und ist somit ein Standardbauelement des Baukastensystems. Abweichend ausgebildet ist das obere Modul des Rollenwagens, nämlich das obere Rollenwagenelement 16, welches hier mit einer Seilanbindung für ein Drahtseil 34 versehen ist. Das Drahtseil 34 weist an einem Ende eine durch eine Kausche 58 geformte Schlaufe 35 auf, welche in eine Presshülse 57 einführbar ist und dann mittels einer Schraube 55 in einer entsprechenden Ausnehmung 53 in dem oberen Rollenwagenelement 16 fixierbar ist.

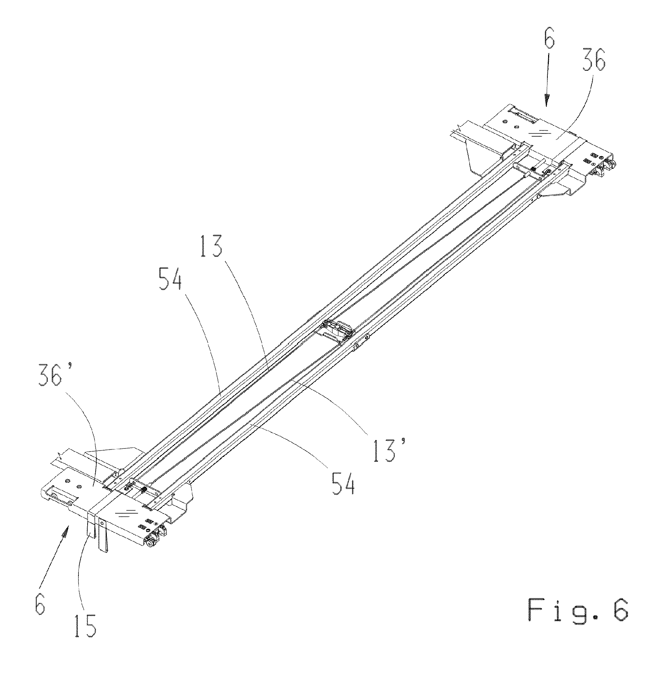

Figur 6 zeigt zwei gegenüberliegende Endrollenwagen 6, welche über zwei Stahlspriegel 54, zwischen welchen Seile 13, 13' einen Verriegelungsmechanismus verlaufen, verbunden sind. Über den Verriegelungsmechanismus, welcher mittels der Schlaufe 15 zu betätigen ist, sind die Endrollenwagen 6 in den Längsgurten 3, 3' (siehe Figur 1) arretierbar. Der Endrollenwagen 6 des modularen Baukastensystems weist wiederum ein identisches unteres Rollenwagenelement 17 auf, welches hier aufgrund der Darstellung nicht erkennbar ist, auf welches ein oberes Rollenelement mit dem den Verriegelungsmechanismus enthaltenden Aufbau 36, 36', an welchem auch ein hier ebenfalls nicht dargestellter Portalbalken 8 (siehe Figur 1) fixierbar ist, auf die bereits beschriebene Art und Weise montierbar ist.

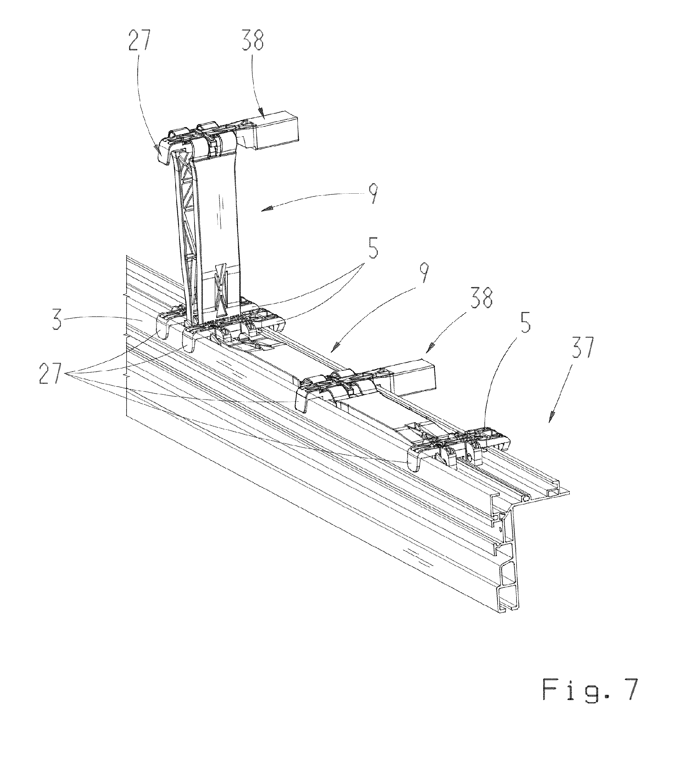

Fig. 7 zeigt auf einem Längsgurt 3 mit darauf angeordneten Rollenwagen 5, welche als Standard-Rollenwagen 5 ausgeführt sind und an welche Faltplatten 9 anbindbar sind, von denen hier lediglich zwei exemplarisch dargestellt ist. Eine der Faltplatten 9 ist in aufgefaltetem Zustand dargestellt, wohingegen die andere Faltplatte 9 in auseinandergeklapptem Zustand dargestellt ist. Die Rollenwagen 5 laufen in einer oberen Schiene 37 des Längsgurts 3. Wie hier erkennbar ist, sind Spriegelanbindungen 38 hier lediglich mittig an den Faltplatten 9 angebracht, an welche die Spriegel 2 anbindbar sind. Auch die als Laschen ausgebildeten Befestigungseinrichtungen 27 für die Plane sind mittig an den Faltplatten 9 und an den Standard-Rollenwagen 5 angeordnet.

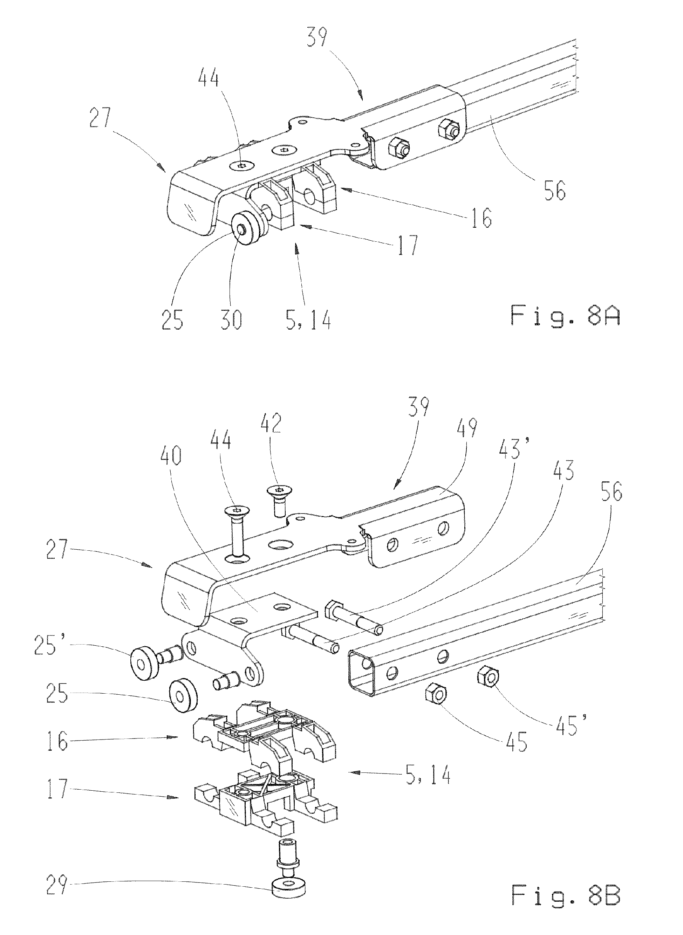

Figuren 8A und 8B zeigen eine Rollenwagen-Spriegelanbindung 39, welche im Gegensatz zu der in Figur 7 dargestellten Ausführungsform unmittelbar an einem Rollenwagen 5 des modularen Baukastensystems angeordnet ist, wobei Figur 8A einen bereits mit dem Rollenwagen 5 verbundenen Belastungsspriegel 56 darstellt und Figur 8B die Rollenwagen-Spriegelanbindung 39 und den Rollenwagen 5 in Einzelteilen darstellt. Wie hier erkennbar ist, weist der Rollenwagen 5 wieder einen zweiteiligen Rollenwagenkörper 14 auf mit einem oberen Rollenwagenelement 16 und einem unteren Rollenwagenelement 17'. Auf das obere Rollenwagenelement 16' wird eine L-förmige Rollenwagenaufnahme 40 und darauf eine Rollenwagen-Spriegelanbindung 39 angeordnet. Das untere Rollenwagenelement 17', das obere Rollenwagenelement 16', die L-förmige Rollenwagenaufnahme 40 und die Rollenwagen-Spriegelanbindung 39 werden durch Schrauben 42 und 44 miteinander verbunden, wobei die Schraube 44 ein selbstformendes Gewinde aufweist, welches ein korrespondierendes Gewinde in eine aufnehmende Bohrung des unteren Rollenwagenelements 17' formt. Die Rollenwagen-Spriegelanbindung 39 weist an ihrem nach Fahrzeuginnen weisenden Ende ein U-förmiges Teil 41 auf. Das U-förmige Teil 41 wird auf den vorzugsweise aus Stahl gebildeten Belastungsspriegel 56 zur Aufnahme von Querkräften aufgesetzt und mit diesem mittels Schrauben 43 und 43' verbunden. Die Schrauben 43 und 43' werden durch Muttern 45, 45' gesichert.

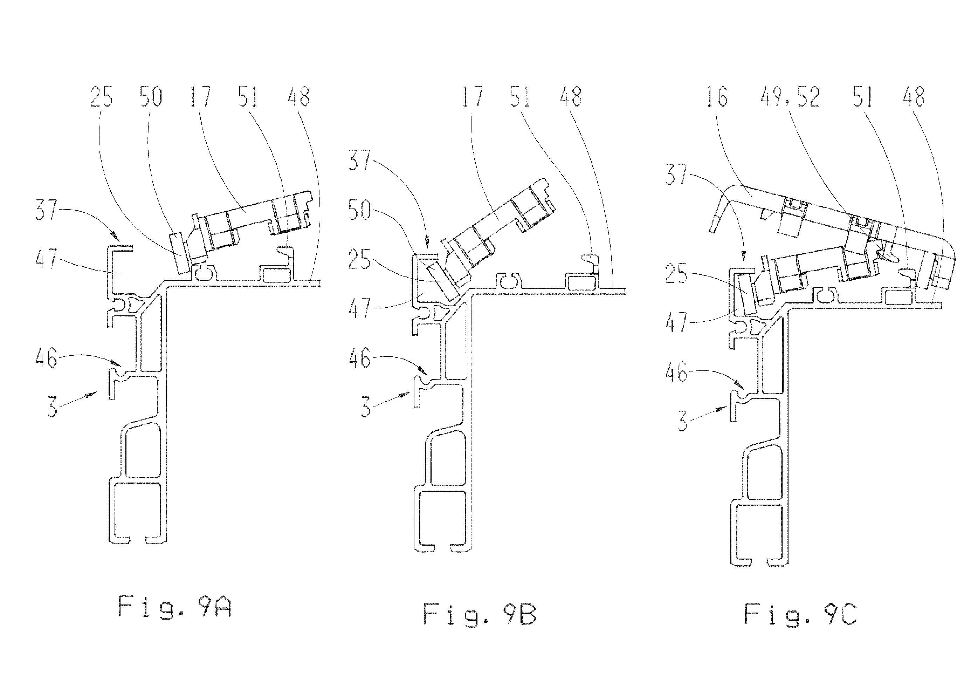

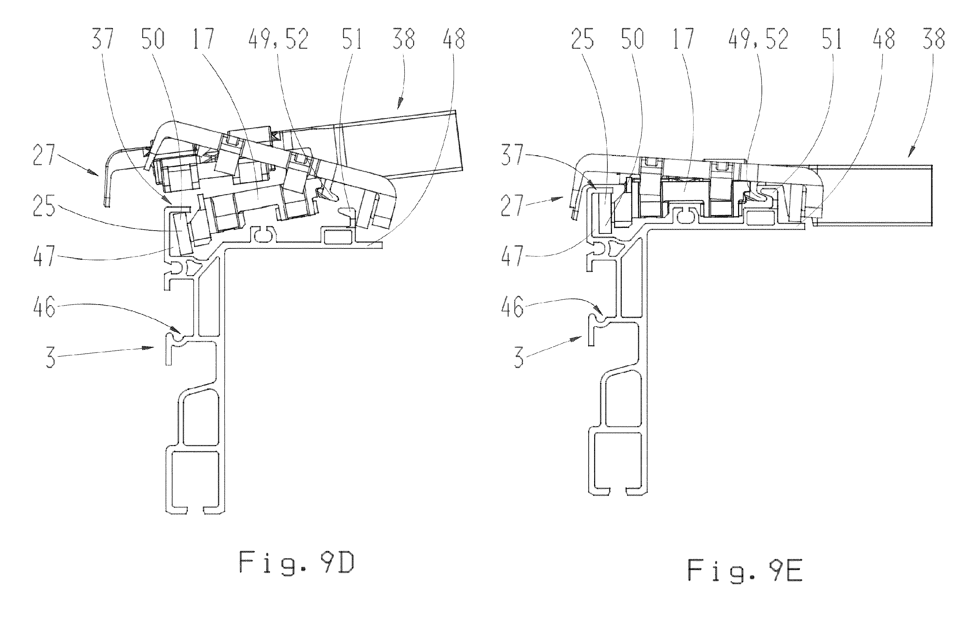

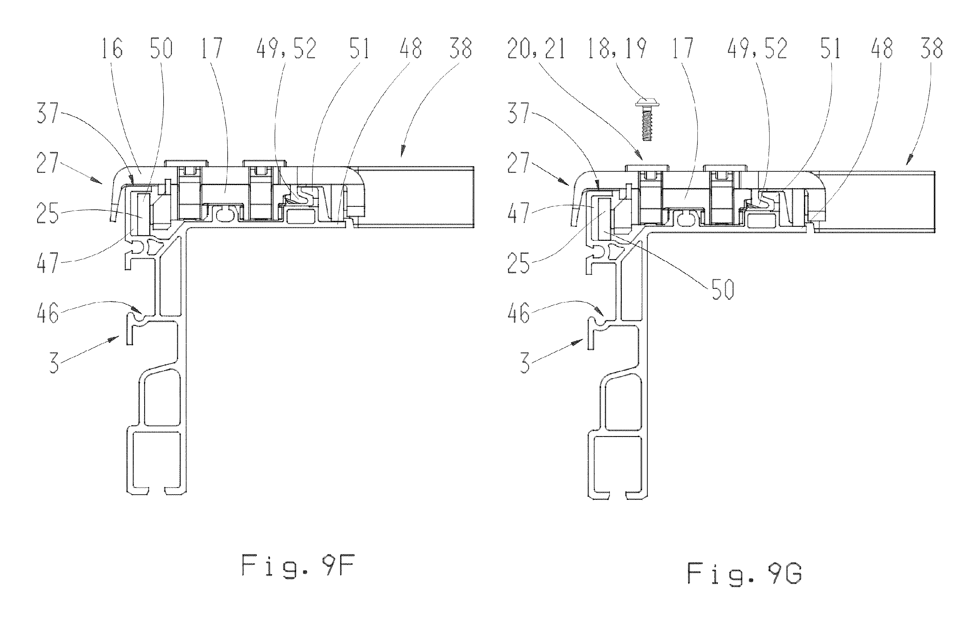

Figuren 9A bis 9G zeigen den Ablauf des Anordnens eines zweiteiligen Rollenwagens 5 gemäß einer Ausführungsform, welcher hier als Standard-Rollenwagen ausgeführt ist, in einer oberen Schiene 37 eines Längsgurts 3. An dem hier dargestellten Längsgurt 3 sind weiterhin hier jedoch aus Gründen der Übersichtlichkeit nicht dargestellte Seitenrollenwagen sowie Rungenrollenwagen in der seitlichen Schiene 46 aufnehmbar. Wie in Figur 9A gezeigt ist, wird das untere Rollenwagenelement 17 zunächst schräg in eine Laufkammer 47 eingeführt (siehe Figuren 9A und 9B). Beim Einführen wird das untere Rollenwagenelement 17 dann immer mehr in eine horizontale Position gebracht. Kurz bevor das untere Rollenwagenelement 17 dann jedoch komplett waagerecht ausgerichtet ist und die Laufräder 25, 25' sich bereits in der Laufkammer 47 befinden, wird das obere Rollenwagenelement 16 ebenfalls schräg auf eine Lauffläche 48 der oberen Schiene 37, jedoch in der entgegengesetzten Richtung zu dem unteren Rollenwagenelement 17 gekippt, aufgesetzt (siehe Figur 9C). Beim weiteren Kippen des oberen Rollenwagenelements 16 in eine horizontale Lage in Richtung zu dem unteren Rollenwagenelement 17 untergreifen an dem oberen Rollenwagenelement 16 vorgesehener Vorsprung 49 einen Vorsprung 51, der an der oberen Schiene 37 vorgesehen ist, um eine Fixierung des Rollenwagens 5 an dem Längsgurt 3 zu ermöglichen (siehe Figur 9D). Weiterhin wird die Spriegelanbindungseinrichtung 38 mit der daran ebenfalls angeordneten Befestigungseinrichtung 27 für eine Plane von oben auf das untere Rollenwagenelement 17 aufgebracht, wobei im nächsten Schritt alle drei Bauteile gemeinsam in eine horizontale Lage auf der oberen Schiene 37 gebracht werden (siehe Figur 9E, 9F). Die Laufrollen 25, 25' des unteren Rollenwagenelements 17 befinden sich nun vollständig in der U-förmig ausgebildeten Laufkammer 47, so dass der Rollenwagen 5 durch die Aufnahme der Laufrollen 25, 25' in der Laufkammer 47 an der oberen Schiene fixiert wird, wobei die Laufrollen 25, 25' als erste Eingriffsmittel 50 wirken. Der an dem oberen Rollenwagenelement 16 ausgebildete Vorsprung 49, welcher den an der oberen Schiene 37 vorgesehenen Vorsprung 51 in diesem Zustand untergreift, wirkt als zweites Eingriffsmittel 52, welches den Rollenwagen 5 auf der der mit den ersten Eingriffsmitteln 50 versehenen gegenüberliegenden Seite sichert. Um den oberen Rollenwagen 16 und den unteren Rollenwagen 17 aneinander zu fixieren, wird schließlich eine Schraube 18 durch die entsprechenden Bohrungen 20, 21 in den beiden Bauteilen eingeschraubt. Dabei ist die Bohrung 20 im oberen Rollenwagenelement 16 als Durchgangsbohrung ausgeführt und die Bohrung 21 im unteren Rollenwagenelement 17 entweder als Bajonett-Aufnahme für den Schnellverschluss 19 oder zur Erzeugung eines durch die Schraube 18 geformten Gewindes mit einem Untermaß ausgebildet. Durch Lösen der Schraube 18 und Durchführen der oben beschriebenen Schritte in der umgekehrten Reihenfolge, wie sie im Zusammenhang mit dem Einsetzen des Rollenwagens 5 in die obere Schiene 37 beschrieben wurden, kann der Rollenwagen 5 wieder aus der oberen Schiene 37 entfernt werden. Wie aus den Figuren ersichtlich ist, kann das Herausnehmen somit im Wesentlichen nach oben aus der Schiene 37 heraus erfolgen und der Rollenwagen 5 muss nicht entlang der Schiene 37 aus dieser herausgefahren werden, was ein einfaches Auswechseln erlaubt.

### Bezugszeichen

- 1: Schiebeverdeckstruktur
- 2: Spriegel
- 3, 3': Längsgurte
- 4: Rollenwagen mit Seilanbindung
- 5: Standard-Rollenwagen
- 6: Endrollenwagen
- 7: erstes Ende
- 8: Portalbalken
- 9: Faltplatten
- 10: Spriegelanbindung
- 11: Rollen
- 12: zweites Ende
- 13: Verriegelungsmechanismus
- 14: Rollenwagenkörper
- 15: Schlaufe
- 16, 16': oberes Rollenwagenelement
- 17, 17': unteres Rollenwagenelement
- 18: Schraube
- 19: Schnellverschluss
- 20: Bohrung in oberem Rollenwagenelement
- 21: Bohrung in unterem Rollenwagenelement
- 22, 22': halbkreisförmige Ausnehmungen in oberem Rollenwagenelement
- 23, 23': halbkreisförmige Ausnehmungen in unterem Rollenwagenelement
- 24, 24': kreisförmige Ausnehmungen bzw. Lager
- 25, 25': Laufrollen des unteren Rollenwagenelements
- 26: Laufrolle des oberen Rollenwagenelements
- 27: Befestigungseinrichtung
- 28: überragender Abschnitt
- 29: radiale Führungsrolle
- 30: Lagerbolzen für Laufrollen des unteren Rollenwagenelements
- 31: Lagerbolzen für Laufrollen des oberen Rollenwagenelements
- 32: erste Fügeschräge
- 33: zweite Fügeschräge
- 34: Drahtseil
- 35: Schlaufe
- 36, 36': Aufbau
- 37: obere Schiene
- 38: Spriegelanbindungseinrichtung
- 39: Rollenwagen-Spriegelanbindung
- 40: plattenartiges Teil
- 41: U-förmiges Teil
- 42: Schraube
- 43, 43': Schrauben
- 44: Schraube
- 45, 45': Muttern
- 46: seitliche Schiene
- 47: Laufkammer
- 48: Lauffläche
- 49: Vorsprung an oberem Rollenkammerelement
- 50: erste Eingriffsmittel
- 51: Vorsprung an oberer Schiene
- 52: zweite Eingriffsmittel
- 53: Ausnehmung
- 54: Stahlspriegel
- 55: Schraube
- 56: Belastungsspriegel
- 57: Presshülse
- 58: Kausche

## Patentansprüche

1. Rollenwagen (4, 5, 6) für eine Schiebeverdeckstruktur (1) eines Lastwagens, mit einem Rollenwagenkörper (14), an welchem an zumindest einer Seite zumindest eine Laufrolle (25, 25') zum Bewegen des Rollenwagens (4, 5, 6) entlang einer an der Schiebeverdeckstruktur (1) vorhandenen Schiene (37) aufweist, **dadurch gekennzeichnet, dass** der Rollenwagenkörper (14) zumindest zweiteilig aus einem oberen Rollenwagenelement (16, 16') und einem unteren Rollenwagenelement (17, 17') aufgebaut ist, welche lösbar miteinander verbunden sind.

2. Rollenwagen (4, 5, 6) gemäß Anspruch 1, **dadurch gekennzeichnet, dass** das obere Rollenwagenelement (16, 16') und das untere Rollenwagenelement (17, 17') im Verbindungszustand gemeinsam als Lager für eine gelenkige Verbindung mit einer Faltplatte (9) der Schiebeverdeckstruktur (1) wirken.

3. Rollenwagen (4, 5, 6) gemäß Anspruch 2, **dadurch gekennzeichnet, dass** nach Lösen und Abnehmen des oberen Rollenwagenelements (16, 16') von dem unteren Rollenwagenelement (17, 17') die Faltplatte (9) aus dem Rollenwagen (4, 5, 6) entnehmbar ist.

4. Rollenwagen (4, 5, 6) gemäß Anspruch 2 oder 3, **dadurch gekennzeichnet, dass** das Lager durch zumindest eine erste halbkreisförmige Ausnehmung (23, 23') in dem unteren Rollenwagenelement (17, 17') und zumindest eine zweite halbkreisförmige Ausnehmung (22, 22') in dem oberen Rollenwagenelement (16, 16') gebildet wird, welche gemeinsam zumindest eine kreisförmige Ausnehmung (24, 24') bilden, in welcher im Verbindungszustand des Rollenwagens (4, 5, 6) die Faltplatte (9) schwenkbar gelagert ist.

5. Rollenwagen (4, 5, 6) gemäß einem der Ansprüche 1 bis 4, **dadurch gekennzeichnet, dass** die lösbare Verbindung des unteren Rollenwagenelements (17, 17') und des oberen Rollenwagenelements (16, 16') mittels eines Schnellverschlusses (19), insbesondere mittels eines in eine in den oberen und unteren Rollenwagenelementen (16, 17) jeweilig vorgesehen Bohrung (20, 21) einführbaren Bolzens oder Schraube (18, 44), gebildet ist.

6. Rollenwagen (4, 5, 6) gemäß einem der Ansprüche 1 bis 5, **dadurch gekennzeichnet, dass** an dem unteren Rollenwagenelement (17) und an dem oberen Rollenwagenelement (16) miteinander korrespondierende Fügeschrägen (32, 33), insbesondere in zwei senkrecht zueinander stehenden Raumrichtungen, als Positionierhilfe beim Zusammenbau des unteren und oberen Rollenwagenelements (17, 16) vorgesehen sind.

7. Rollenwagen (4, 5, 6) gemäß einem der Ansprüche 1 bis 6, **dadurch gekennzeichnet, dass** das obere Rollenwagenelement (16') eine Rollenwagen-Spriegelanbindung (39) zum Verbinden des Rollenwagens (4, 5, 6) mit einem elastungsspriegel (56) der Schiebeverdeckstruktur (1) aufweist.

8. Rollenwagen (4, 5, 6) gemäß einem der Ansprüche 1 bis 7, **dadurch gekennzeichnet, dass** das obere Rollenwagenelement (16, 16') und das untere Rollenwagenelement (17, 17') aus Kunststoff hergestellt sind.

9. Rollenwagen (4, 5, 6) gemäß einem der Ansprüche 1 bis 8, **dadurch gekennzeichnet, dass** das untere Rollenwagenelement (17) mit ersten Eingriffsmitteln (50) zum in Eingriff nehmen der Schiene (37) der Schiebeverdeckstruktur (1) versehen ist.

10. Rollenwagen (4, 5, 6) gemäß einem der Ansprüche 1 bis 9, **dadurch gekennzeichnet, dass** das obere Rollenwagenelement (16) mit zweiten Eingriffsmitteln (52) zum in Eingriff nehmen der Schiene (37) der Schiebeverdeckstruktur (1) versehen ist, vorzugsweise, dass die ersten Eingriffsmittel (50) und die zweiten Eingriffsmittel (52) in einer Raumrichtung senkrecht zu einer Längserstreckung der Schiene (37) der Schiebeverdeckstruktur (1) angeordnet sind.

11. Rollenwagen (4, 5, 6) gemäß Anspruch 10, **dadurch gekennzeichnet, dass** die ersten Eingriffsmittel (50) an dem Rollenwagen (4, 5, 6) gegenüberliegend den zweiten Eingriffsmitteln (52) angeordnet sind.

12. Modulares Baukastensystem für einen Rollenwagen (4, 5, 6) für eine Schiebeverdeckstruktur (1) eines Lastwagens, insbesondere für einen Rollenwagen (4, 5, 6) gemäß einem der vorherigen Ansprüche, **dadurch gekennzeichnet, dass** das Baukastensystem ein unteres Rollenwagenelement (17) mit zumindest einer Laufrolle (25, 25') zum Bewegen des Rollenwagens (4, 5, 6) in einer Schiene (37) und zumindest ein oberes Rollenwagenelement (16) aufweist, wobei das obere Rollenwagenelement (16) lösbar mit dem unteren Rollenwagenelement (17) verbunden ist, vorzugsweise, dass das zumindest eine obere Rollenwagenelement (16, 16') als Element für einen Standardrollenwagen (5), einen Endlaufwagen (6), als Rollenwagen mit Seilanbindung (4) oder als Rollenwagen mit Elementaufnahmen zum Verbinden mit Trägerelementen ausgebildet ist.

13. Modulares Baukastensystem gemäß Anspruch 12, **dadurch gekennzeichnet, dass** das obere Rollenwagenelement (16, 16') von dem unteren Rollenwagenelement (17) mit dem unteren Rollenwagenelement (17) in der Schiene (37) angeordnet entfernbar ist.

14. Schiebeverdeckstruktur (1) für Lastwagen mit einer Abdeckplane, die durch mehrere Spriegel (2) abgestützt wird, wobei die Spriegel (2) endseitig durch jeweils eine Faltplatte lösbar aufgenommen werden und wobei die Faltplatten endseitig schwenkbar mit Rollenwagen (4, 5, 6) verbunden sind, die entlang in Fahrtrichtung verlaufender Schienen zwangsgeführt verschiebbar sind, **dadurch gekennzeichnet, dass** ein Austausch einzelner Faltplatten im Zusammenbauzustand der Schiebeverdeckstruktur (1) möglich ist.

15. Schiebeverdeckstruktur (1) nach Anspruch 14, **dadurch gekennzeichnet, dass** durch eine geteilte Ausführung der Rollenwagen (4, 5, 6) ein Austausch einzelner Faltplatten (9) und / oder Rollenwagen (4, 5, 6) im Zusammenbauzustand der Schiebeverdeckstruktur (1) ermöglicht wird, vorzugsweise, dass durch eine geteilte Ausführung der Rollenwagen (4, 5, 6), insbesondere mit einer Teilungsebene, die durch den Verbindungsbereich zwischen Rollenwagen (4, 5, 6) und Faltplatte (9) verläuft, ein Austausch einzelner Faltplatten (9) im Zusammenbauzustand der Schiebeverdeckstruktur (1) ermöglicht wird.
